**Europäisches Patentamt**

**European Patent Office**

**Office européen des brevets**

(11) Veröffentlichungsnummer: **0 015 534**
**B1**

(12) **EUROPÄISCHE PATENTSCHRIFT**

(45) Veröffentlichungstag der Patentschrift:
**18.05.83**

(51) Int. Cl.³: **H 04 N 1/44,** H 04 L 9/00

(21) Anmeldenummer: **80101071.1**

(22) Anmeldetag: **03.03.80**

(54) **Verfahren zur verschlüsselten Übertragung von Daten.**

(30) Priorität: **08.03.79 DE 2908979**

(43) Veröffentlichungstag der Anmeldung:
**17.09.80 Patentblatt 80/19**

(45) Bekanntmachung des Hinweises auf die Patenterteilung:
**18.05.83 Patentblatt 83/20**

(84) Benannte Vertragsstaaten:
**BE CH NL**

(56) Entgegenhaltungen:
**DE-A-1 924 676**
**DE-A-2 218 447**
**DE-B-2 706 421**
**DE-C-978 033**
**DE-C-978 042**
**DE-C-2 517 073**
**FR-A-2 210 307**
**GE-A-1 429 469**
**US-A-2 690 475**

(73) Patentinhaber: **SIEMENS AKTIENGESELLSCHAFT,**
**Berlin und München Wittelsbacherplatz 2,**
**D-8000 München 2 (DE)**

(72) Erfinder: **Rauch, Walter, Dipl.-Ing.,**
**Ammerseestrasse 155, D-8021 Neuried (DE)**

ACTORUM AG

## Verfahren zur verschlüsselten Übertragung von Daten

Die Erfindung bezieht sich auf ein Verfahren zur verschlüsselten Übertragung von Daten gemäss dem Oberbegriff des Patentanspruches 1.

Bei der verschlüsselten Faksimile-Übertragung müssen bekanntlich die Schlüsselrechner auf der Sendeseite und auf der Empfangsseite bitgenau synchron arbeiten. Bei einer Verschiebung auf der Empfangsseite um ein Bit gegenüber der Sendeseite wird bereits ein ordnungsgemässes Entschlüsseln des Bitstromes verhindert. Die Faksimile-Übertragung ohne Verschlüsselung ist verhältnismässig störunempfindlich. Damit die Verschlüsselung die Übertragungseigenschaften möglichst wenig beeinflusst, muss der Synchronismus weitgehend unabhängig von längeren Störungen aufrechterhalten werden. Dies gilt sowohl für die Übertragung auf Leitungen als auch auf Funkstrecken.

Es ist bereits bekannt, dass sich die empfangende Datenübertragungseinrichtung und das zugehörige empfangsseitige Schlüsselgerät auf die Taktfrequenz des empfangenen Bitstromes einstellen. Auf diese Weise wird die Taktfolgefrequenz des empfangsseitigen Taktgebers nachgeregelt und der Synchronismus wird automatisch laufend kontrolliert. Bei der Übertragung über Leitungen kann mit verhältnismässig geringem Aufwand bei einer Taktgeber-Genauigkeit von $10^{-4}$ und mit grosser Sicherheit der Synchronismus aufrechterhalten werden. Die Gründe hierfür sind:

a) Die Störungen sind verhältnismässig kurz in der Grössenordnung von einigen Millisekunden.

b) Innerhalb eines längeren Zeitraumes sind die Anzahlen der Störungen und der übertragenen Bits selten in der gleichen Grössenordnung.

c) Verschiebungen auf Grund von zeitlichen Änderungen der Signallaufzeiten sind auszuschliessen.

Bei der Übertragung über normale Funkstrecken sind die Voraussetzungen a, b und c meist nicht erfüllt. Insbesondere müssen bei Funkstrecken Ruftöne von Störsendern berücksichtigt werden, die einen Empfänger leicht aus dem Synchronismus bringen. Die beschriebene und bekannte Art der Synchronisierung ist daher bei der Übertragung auf Funkstrecken praktisch nur auf guten wenig gestörten Funkstrecken zur verschlüsselten Faksimile-Übertragung anwendbar.

Aus der DE-OS 1 924 676 ist ein Verfahren zum verschlüsselten Übertragen von Daten bekannt, bei dem mehrere Schlüsselpräambeln zeitlich nacheinander übertragen werden, und bei dem die Schlüsselgeneratoren auf der Sende- und auf der Empfangsseite jeweils nach dem Erkennen der Schlüsselpräambeln synchronisiert werden. Ausserdem wird mit Hilfe von Schlüsselpräambeln ein empfangsseitiger Taktgenerator synchronisiert. Die Synchronisierung wird nach dem Ende jeder Schlüsselpräambel abgeschaltet, so dass während der Übertragung der Daten der Taktgenerator nicht nachgeregelt wird. Unter Verwendung dieses bekannten Verfahrens werden Textdaten, d.h. binär codierte alphanumerische Zeichen übertragen. Der sendeseitigen Einrichtung werden die Schlüsselpräambeln zusätzlich zu den Textdaten zugeführt, so dass sich die Übertragungsdauer entsprechend erhöht. Dies trifft insbesondere für stark gestörte Übertragungsstrecken zu, da dann die Schlüsselpräambeln entsprechend häufig eingeblendet werden müssen, um den Synchronismus aufrechtzuerhalten.

Der Erfindung liegt daher die Aufgabe zugrunde, ein Verfahren zur Synchronisierung der Sende- und Empfangseinrichtungen bei der verschlüsselten Übertragung von Faksimiledaten anzugeben, das sich auch bei stark gestörten Übertragungsstrecken; insbesondere bei stark gestörten Funkstrecken bewährt, und bei dem die Übertragungsdauer nicht wesentlich erhöht wird.

Die der Erfindung zugrundeliegende Aufgabe wird bei dem Verfahren der eingangs genannten Art durch die im kennzeichnenden Teil des Patentanspruchs 1 angegebenen Merkmale gelöst.

Zur rationellen Abwicklung des Verfahrens ist es zweckmässig, die im Patentanspruch 2 angegebenen Verfahrensschritte anzuwenden.

Falls mit besonders grossen Störungen zu rechnen ist, ist es zweckmässig, die im Patentanspruch 3 angegebenen Verfahrensschritte anzuwenden.

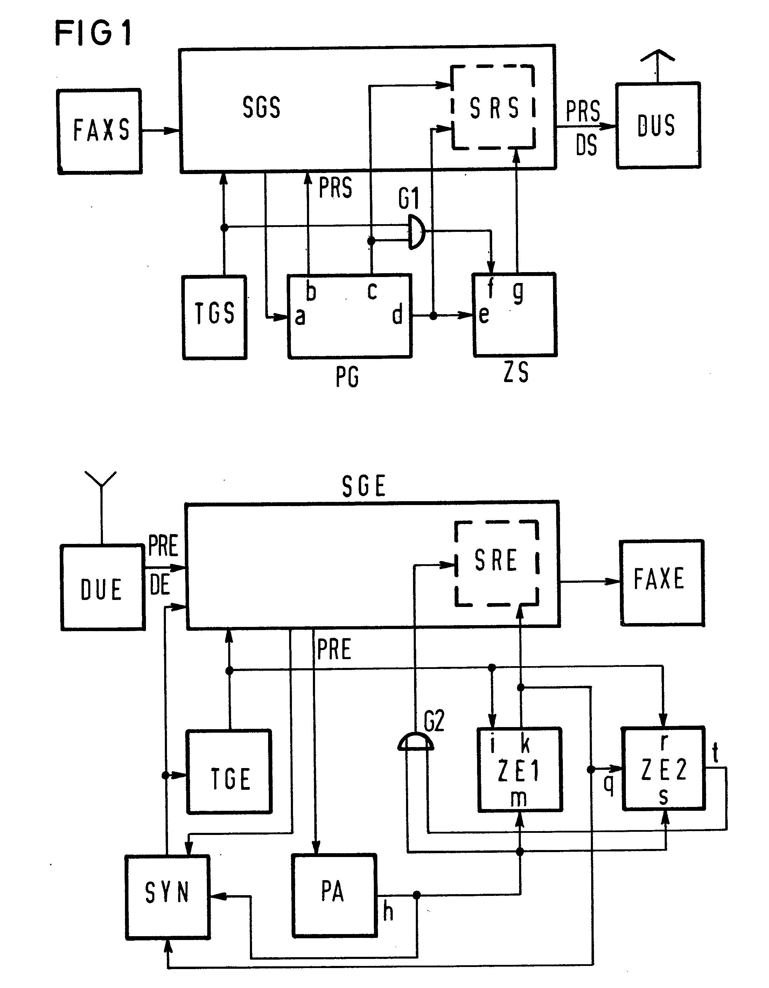

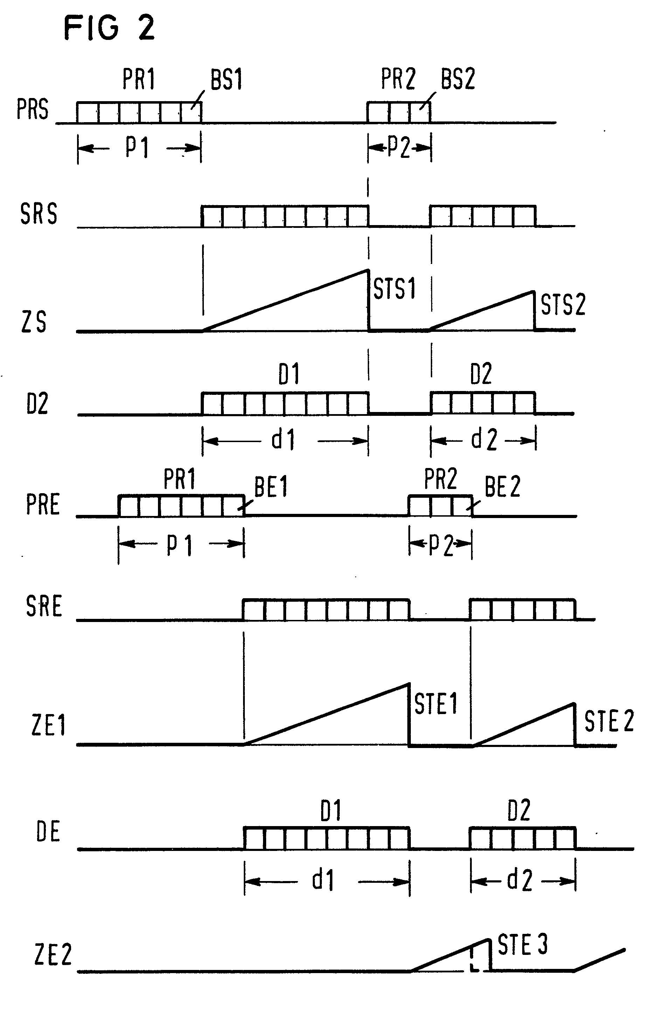

Im folgenden werden Ausführungsbeispiele der Erfindung anhand der Fig. 1 und 2 beschrieben.

Fig. 1 zeigt die sendeseitigen und empfangsseitigen Einrichtungen zur verschlüsselten Übertragung von Faksimiledaten.

Fig. 2 zeigt Diagramme von Datenformaten und Zählerständen, die bei Betrieb der in Fig. 1 dargestellten Einrichtungen eine Rolle spielen.

Fig. 1 zeigt oben ein sendeseitiges Faksimilegerät FAXS, einen sendeseitigen Schlüsselgenerator SGS, einen sendeseitigen Taktgeber TGS, einen Präambelgenerator PG, ein UND-Glied G1, einen sendeseitigen Zähler ZS, und eine sendeseitige Datenübertragungseinrichtung DUS. Innerhalb des Schlüsselgerätes SGS ist der sendeseitige Schlüsselrechner SRS zu denken. Das Faksimile-Gerät FAXS liefert die unverschlüsselten Faksimiledaten. Der Taktgeber TGS liefert Taktimpulse, deren Folgefrequenz gleich der Bitfrequenz ist. Der Präambelgenerator PG ist über seinen Eingang a mit dem Schlüsselgerät SGS verbunden und erzeugt zeitlich nacheinander die sendeseitigen Schlüsselpräambeln PRS, die er über den Ausgang b an das Schlüsselgerät SGS abgibt. Über den Ausgang c gibt der Präambelgenerator ein Binärsignal ab, das mit einem O-Binärwert die gleichzeitige Abgabe der Präambeln PRS signalisiert, und das mit einem 1-Binärwert jene Zeiten signalisiert, während der keine Schlüsselpräambeln PRS erzeugt und abgegeben werden. Über den Ausgang d gibt der Präambelgenerator PG Signale ab, welche die letzten Bits der abgegebenen Schlüsselpräambeln signalisieren.

Wenn der Zähler ZS über den Eingang e Signale erhält, dann wird ein bestimmter Anfangszählerstand eingestellt. Über den Eingang f erhält der Zähler ZS Zählimpulse, die über den Ausgang des Gliedes G1 abgegeben werden. Über den Ausgang g gibt der Zähler ZS Signale ab, die vorgegebene Endzählerstände signalisieren.

Das Schlüsselgerät SGS erhält vom Faksimilegerät FAXS die unverschlüsselten Faksimiledaten, erhält vom Taktgeber TGS Taktimpulse, empfängt vom Präambelgenerator PG jeweils eine Schlüsselpräambel und gibt an die Datenübertragungseinrichtung DUS zeitlich nacheinander Schlüsselpräambeln und verschlüsselte Faksimiledaten ab. Die Datenübertragungseinrichtung DUS verstärkt die empfangenen Signale und sendet sie über eine Funkstrecke an die in Fig. 1 unten dargestellten Einrichtungen.

Die empfangsseitige Datenübertragungseinrichtung DUE empfängt die gesendeten Signale und gibt die Schlüsselpräambeln und die verschlüsselten Faksimiledaten an das empfangsseitige Schlüsselgerät SGE ab. Der empfangsseitige Taktgeber TGE erzeugt ein Taktsignal, dessen Folgefrequenz gleich der Bitfrequenz ist. Dieser Taktgeber TGE wird in an sich bekannter Weise mit der Synchronisiereinrichtung SYN derart nachgeregelt, dass er bitsynchron mit dem sendeseitigen Taktgeber TGS läuft. Der Präambelauswerter PA erhält vom Schlüsselgerät SGE empfangene Schlüsselpräambeln PRE und gibt über den Ausgang h ein Signal ab, welches das Ende der jeweils empfangenen Schlüsselpräambeln signalisiert.

Der empfangsseitige Zähler ZE1 wird mit einem Signal am Eingang m gestartet. Er zählt dann die Taktimpulse, die er über den Eingang i erhält. Bei Erreichen vorgegebener Endzählerstände gibt er über den Ausgang k Signale ab.

Der zweite Zähler ZE2 wird mit einem Signal am Eingang s in seinen Anfangszählerstand zurückgesetzt. Mit einem Signal am Eingang q wird der zweite Zähler ZE2 gestartet. Er zählt dann die Taktimpulse, die über den Eingang r zugeführt werden. Über den Ausgang t gibt der zweite Zähler ZE2 Signale ab, die das Erreichen eines Endzählerstandes signalisieren.

Im folgenden wird die Wirkungsweise der in Fig. 1 dargestellten Einrichtungen anhand der in Fig. 2 dargestellten Diagramme beschrieben. In Fig. 2 sind oben die erste Schlüsselpräambel PR1 und die zweite Schlüsselpräambel PR2 schematisch dargestellt, die mit dem sendeseitigen Präambelgenerator PG erzeugt werden. Während der Dauer p1 der Schlüsselpräambel PR1 ist das Glied G1 gesperrt, so dass der Zähler ZS keine Zählimpulse erhält. Nach dem letzten Bit BS1 gibt der Präambelgenerator über den Ausgang d ein Signal ab, das den Zähler ZS startet; dieser Zähler zählt nun die Taktimpulse, die über den Eingang f zugeführt werden. Nach dem letzten Bit BS1 wird ja über den Ausgang c des Präambelgenerators PG ein 1-Binärwert abgegeben, so dass die Taktimpulse des Taktgebers TGS über das Glied G1 am Eingang f ankommen. Vorher wurde auch der Schlüsselrechner SRS eingestellt und nach dem letzten Bit BS1 der Schlüsselpräambel PR1 wird auch der sendeseitige Schlüsselrechner SRS gestartet. Damit werden aber die dem Schlüsselgerät SGS eingangs zugeführten unverschlüsselten Faksimiledaten verschlüsselt, und es wird die erste Folge D1 der verschlüsselten Faksimiledaten gesendet.

Wenn der Zähler ZS einen ersten Endzählerstand STS1 erreicht, dann gibt er über den Ausgang g ein Signal ab, das den Schlüsselrechner SGS anhält. Dies ist auch das Ende der ersten Folge der verschlüsselten Faksimiledaten D1. Danach gibt der Präambelgenerator PG die zweite Schlüsselpräambel PR2 ab. Während der Dauer p2 ist einerseits der Schlüsselrechner SRS gesperrt und anderseits erhält der Zähler ZS keine Zählimpulse. Nach dem letzten Bit BS2 wird der Zähler ZS erneut gestartet und auch der Schlüsselrechner SRS wird erneut über das Signal des Ausganges c freigegeben, so dass die verschlüsselten Faksimiledaten D2 gesendet werden. Der Zählerstand des Zählers ZS wird während der Dauer d2 wieder laufend erhöht und bei Erreichen des Endzählerstandes STS2 wird der Schlüsselrechner SRS erneut angehalten. Damit wird die Abgabe der verschlüsselten Faksimiledaten D2 beendet.

Auf der Empfangsseite wird die Schlüsselpräambel PR1 mit Hilfe der Datenübertragungseinrichtung DUE empfangen. Der Präambelauswerter PA erkennt die Schlüsselpräambel PR1 und nach dem letzten Bit BE1 gibt der Präambelauswerter über den Ausgang h ein Signal ab, das einerseits die Synchronisierung abschaltet, so dass der Taktgenerator TGE nicht mehr nachgeregelt wird und die beiden Taktgeneratoren TGS und TGE frei laufen. Anderseits wird mit dem vom Ausgang h abgegebenen Signal der Zähler ZE1 zurückgesetzt und gestartet und der empfangsseitige Schlüsselrechner SRE wird eingestellt und ebenfalls gestartet. Der Schlüsselrechner SRE entschlüsselt die Daten D1 und gibt die entschlüsselten Daten an das Faksimilegerät FAXE ab. Unterdessen wird der Zähler ZE1 hochgezählt und bei Erreichen des Endzählerstandes STE1 wird über den Ausgang k ein Signal abgegeben, das den Schlüsselrechner SRE anhält. Mit dem über den Ausgang k abgegebenen Signal wird die Synchronisierung mit Hilfe der Synchronisiereinrichtung SYN eingeschaltet, so dass der Taktgeber TGE während der Dauer der nun folgenden zweiten Schlüsselpräambel PR2 erneut nachgeregelt wird.

Der Präambelauswerter PA empfängt die Präambel PR2, erkennt das letzte Bit BE2 und gibt über den Ausgang h wieder ein Signal ab, das die Synchronisierung abschaltet, den Zähler ZE1 zurücksetzt und startet und den Schlüsselrechner SRE ebenfalls startet. Damit werden die Daten D2 entschlüsselt und dem Faksimile-Gerät FAXE zugeleitet. Wenn der Zähler ZE1 einen vorgegebenen Endzählerstand STE2 erreicht, dann gibt er über den Ausgang k ein Signal ab, das den Schlüsselrechner SRE anhält und die Synchronisierung SYN wieder anschaltet. Während einer dann empfangenen dritten Schlüsselpräambel, die in Fig. 2 nicht mehr dargestellt ist, wird der Taktgenerator TGE erneut mit Hilfe der Synchronisiereinrichtung SYN nachgeregelt. Der Taktgenerator TGE wird somit immer während der Dauer p1 bzw. p2 der Schlüsselpräambel PR1 bzw. PR2 nachgeregelt und während der Dauer der Entschlüsselung der Daten D1 bzw. D2 wird die Synchronisierung abgeschaltet, so dass die Taktgeneratoren TGS und TGE frei laufen.

In Fig. 2 sind die beiden Schlüsselpräambeln PR1, PR2 und die entsprechenden Folgen von Faksimiledaten D1, D2 dargestellt. Die Anzahl der Schlüsselpräambeln und die Anzahl der Folgen von Faksimiledaten ist einerseits von der Güte der Taktgeber TGS, TGE und anderseits von der Menge der zu übertragenden Faksimiledaten abhängig. Mindestens wird die Schüsselpräambel PR1 übertragen und damit wird der Gleichlauf der beiden Taktgeneratoren TGE und TGS hergestellt. Danach wird die Synchronisierung abgeschaltet. Falls die Taktgeber TGS und TGE derart frequenzstabil arbeiten, dass sie auch bei nicht synchronisiertem Betrieb während der Übertragung der Faksimiledaten bitsynchron bleiben, dann ist eine Übertragung einer weiteren Schlüsselpräambel, beispielsweise der Schlüsselpräambel PR2 – nicht erforderlich. Falls mit weniger frequenzstabilen Taktgeneratoren TGS, TGE gearbeitet wird, dann kann es erforderlich sein, während der Dauer weiterer Schlüsselpräambeln den Taktgeber TGE derart nachzuregeln, dass die beiden Taktgeber TGS und TGE während des darauffolgenden nicht synchronisierten Betriebes bitsynchron bleiben.

Das Ende einer Nachricht wird in an sich bekannter Weise mit einer Kennung signalisiert, die mit dem Präambelgenerator PG erzeugt und wie die Präambeln übertragen wird. Diese Kennung bringt die in Fig. 1 dargestellte Anlage in einen Grundzustand, von dem aus sie mit der Präambel PR1 wieder gestartet werden kann.

Grundsätzlich können alle übertragenen Schlüsselpräambeln die gleiche Länge haben. Im allgemeinen ist es jedoch zweckmässig, mit einer längeren ersten Schlüsselpräambel PR1 zu arbeiten, weil damit zusätzlich zum Gleichlauf des Taktgeber auch der Gleichlauf der Schlüsselgeneratoren hergestellt werden muss, wogegen mit Hilfe der weiteren ev. kürzeren Schlüsselpräambel der Gleichlauf der Taktgeneratoren aufrechterhalten werden muss. Beispielsweise kann die erste Schlüsselpräambel PR1 aus insgesamt 500 Bit bestehen und die weiteren Schlüsselpräambeln aus je 200 Bit. Die Schlüsselpräambeln sind aber relativ kurz im Vergleich zu den Zeiten d1, d2 der Datenübertragung. Beispielsweise können nach den 500 Bits der ersten Präambel PR1 170 000 Bits der Daten D1 und anschliessend 200 Bits der zweiten Schlüsselpräambel PR2 übertragen werden. Die Dauer p1 der Schlüsselpräambel PR1 soll beim praktischen Betrieb höchstens 1% der Dauer d1 der Daten D1 betragen. Es ist günstig, wenn die Dauer p1, p2 in der Grössenordnung von Millisekunden liegt, wogegen die Dauer d1, d2 je nach der Grössenordnung einiger Minuten liegt. Unter dieser Voraussetzung können die Faksimile-Endgeräte FAXS und FAXE ohne Unterbrechung betrieben werden. Die während der Übertragung der Schlüsselpräambeln ausgefallenen Daten machen sich im Endgerät FAXE wegen ihrer Kürze nicht störend bemerkbar.

Die Dauer d1, d2 der übertragenen Daten kann grundsätzlich gleich sein. Um die Entschlüsselung der verschlüsselten Daten D1, D2 zu erschweren, ist es jedoch günstig, wenn die Dauer d1, d2 und die Dauer weiterer Daten in quasi zufälliger Weise variiert.

In Fig. 1 ist auf der Empfangsseite ausser dem Zähler ZE1 auch der Zähler ZE2 vorgesehen. Die zusätzliche Verwendung dieses Zählers ZE2 ist insbesondere dann zweckmässig, wenn mit grösseren Störungen zu rechnen ist, so dass gegebenenfalls beispielsweise die Schlüsselpräambel PR2 auf der Empfangsseite nicht als solche erkannt wird. Um auch in diesem Fall die ordnungsgemässe Übertragung der Daten D2 zu gewährleisten, übernimmt der Zähler ZE2 die Funktion des letzten Bits PE2 der Schlüsselpräambel PR2. Bei gestörtem Betrieb und bei ungestörtem Betrieb wird der Zähler ZE2 bei Erreichen des Zählerstandes STE1 gestartet. Zu diesem Zeitpunkt wird ja über den Ausgang k des Zählers ZE1 ein Signal an den Eingang q abgegeben, der einen Anfangszählerstand des Zählers ZE2 einstellt. Danach zählt der Zähler ZE2 die Taktimpulse, die er über den Eingang r erhält. Bei ungestörtem Betrieb wird die Schlüsselpräambel PR2 ordnungsgemäss empfangen und mit dem letzten Bit BE2 wird über den Eingang s ein Signal zugeführt, das den Zähler ZE2 stoppt. In Fig. 2 unten ist dieser Vorgang durch eine gestrichelte Linie dargestellt. Im Störungsfalle wird die Schlüsselpräambel PR2 auf der Empfangsseite nicht erkannt und daher wird der Zähler ZE2 nicht automatisch mit dem Auftreten des letzten Bits BE2 gestoppt. Der Zählerstand des Zählers ZE2 erhöht sich nun um einige Bit und bei Erreichen des Zählerstandes STE3 wird über den Ausgang t und über das Glied G2 ein Impuls abgegeben, der den Schlüsselrechner SRE in ähnlicher Weise startet, wie dies bei ungestörtem Betrieb durch ein Signal über den Ausgang h des Präambelauswerters PA getan wird.

**Patentansprüche**

1. Verfahren zur verschlüsselten Übertragung von Daten, bei dem mehrere Schlüsselpräambeln übertragen werden, bei dem während des Empfangs der Schlüsselpräambeln (PR1, PR2) die Impulsfolgefrequenz eines Taktgenerators (TGE) auf der Empfangsseite nachgeregelt wird, und bei dem nach dem Empfang der Schlüsselpräambeln der empfangsseitige Schlüsselrechner (SRE) eingestellt wird und die Nachregelung des empfangsseitigen Taktgenerators bis zur jeweils nächsten Schlüsselpräambel gesperrt wird, dadurch gekennzeichnet, dass für die Synchronisierung einer Übertragung von Faksimiledaten die zuerst übertragene Schlüsselpräambel (PR1) aus einer grösseren Anzahl von Bits besteht, als die danach übertragenen Schlüsselpräambeln (PR2), dass nach den Schlüsselpräambeln (PR1, PR2) jeweils eine Folge von Faksimiledaten übertragen wird, deren Dauer lang ist im Vergleich zur Dauer der vorher übertragenen Schlüsselpräambeln (PR1, PR2) und dass angeschlossene Faksimilegeräte (FAXS, FAXE) auf der Sendeseite und auf der Empfangsseite auch während der Übertragung der Schlüsselpräambeln (PR1, PR2) in Betrieb sind, so dass die Schlüsselpräambeln (PR1, PR2) anstelle der entsprechenden Faksimiledaten übertragen werden.

2. Verfahren nach Anspruch 1, gekennzeichnet durch die folgenden Verfahrensschritte:

A. Auf der Sendeseite wird ein Anfangszählerstand eines sendeseitigen Zählers (ZS) eingestellt und nach dem letzten Bit (BS1) der Schlüsselpräambel (PR1) wird der sendeseitige Zähler (ZS) gestartet.

B. Auf der Sendeseite wird ein sendeseitiger Schlüsselrechner (SRS) eingestellt und nach dem letzten Bit (BS1) der Schlüsselpräambel (PR1) wird der sendeseitige Schlüsselrechner (SRS) gestartet.

C. Nach dem letzten Bit (BS1) der Schlüsselpräambel (PR1) wird die Folge der verschlüsselten Faksimiledaten (D1) gesendet bis der sendeseitige Zähler (ZS) einen ersten Endzählerstand (STS1) erreicht, bei dem der sendeseitige Schlüsselrechner (SRS) definiert angehalten wird; danach wird die zweite Schlüsselpräambel (PR2) gesendet.

D. Auf der Sendeseite wird der Anfangszählerstand des sendeseitigen Zählers (ZS) eingestellt und nach dem letzten Bit (BS2) der zweiten Schlüsselpräambel (PR2) wird der sendeseitige Zähler (ZS) gestartet.

E. Auf der Sendeseite wird der sendeseitige Schlüsselrechner (SRS) eingestellt und nach dem letzten Bit (BS2) der zweiten Schlüsselpräambel (PR2) wird der sendeseitige Schlüsselrechner (SRS) gestartet.

F. Nach dem letzten Bit (BS2) der zweiten Schlüsselpräambel (PR2) wird die zweite Folge der verschlüsselten Faksimiledaten (D2) gesendet bis der sendeseitige Zähler (ZS) einen zweiten Endzählerstand erreicht, bei dem der sendeseitige Schlüsselrechner (SRS) definiert angehalten wird.

G. Auf der Empfangsseite wird ein Anfangszählerstand eines empfangsseitigen Zählers (ZE1) eingestellt und nach Empfang des letzten Bits (BE1) der Schlüsselpräambel (PR1) wird der empfangsseitige Zähler (ZE1) gestartet.

H. Auf der Empfangsseite wird ein empfangsseitiger Schlüsselrechner (SRE) eingestellt und nach Empfang des letzten Bits (BE1) der Schlüsselpräambel (PR1) wird der empfangsseitige Schlüsselrechner (SRE) gestartet.

K. Nach Empfang des letzten Bits (BE1) der Schlüsselpräambel (PR1) wird die Folge der verschlüsselten Faksimiledaten (D1) empfangen und die Synchronisierung abgeschaltet bis der empfangsseitige Zähler (ZE1) einen vorgegebenen Endzählerstand (STE1) erreicht, der gleich dem Endzählerstand (STS1) des sendeseitigen Zählers (ZS) ist und bei dem der empfangsseitige Schlüsselrechner (SRE) definiert angehalten wird; danach wird die zweite Schlüsselpräambel (PR2) empfangen und die Synchronisierung angeschaltet.

L. Auf der Empfangsseite wird der Anfangszählerstand des empfangsseitigen Zählers (ZE1) eingestellt und nach Empfang des letzten Bits (BE2) der zweiten Schlüsselpräambel (PR2) wird der empfangsseitige Zähler (ZE1) gestartet.

M. Auf der Empfangsseite wird der empfangsseitige Schlüsselrechner (SRE) eingestellt und nach Empfang des letzten Bits (BE2) der zweiten Schlüsselpräambel (PR2) wird der empfangsseitige Schlüsselrechner (SRE) gestartet.

N. Nach Empfang des letzten Bits (BE2) der zweiten Schlüsselpräambel (PR2) wird die zweite Folge der verschlüsselten Faksimiledaten (D2) empfangen und die Synchronisierung abgeschaltet bis der empfangsseitige Zähler (ZE1) einen zweiten Endzählerstand (STE2) erreicht, der gleich dem zweiten Endzählerstand (STS2) des sendeseitigen Zählers (ZS) ist und bei dem der empfangsseitige Schlüsselrechner (SRE) definiert angehalten wird. (Fig. 2).

3. Verfahren nach Anspruch 2, gekennzeichnet durch folgende Schritte:

A. Auf der Empfangsseite wird ein zweiter Zähler (ZE2) gestartet, wenn der empfangsseitige Zähler (ZE1) seinen Endzählerstand (STE1) erreicht.

B. Bei ordnungsgemässem Empfang der zweiten Schlüsselpräambel (PR2) wird mit Hilfe eines Decodierers ein Decodiersignal gewonnen und damit wird der zweite Zähler (ZE2) nach dem letzten Bit (BE2) der zweiten Schlüsselpräambel (PR2) zurückgesetzt bevor der zweite Zähler (ZE2) seinen Endzählerstand (STE3) erreicht hat.

C. Bei Nichterkennung der zweiten Schlüsselpräambel (PR2) wird das Decodiersignal nicht abgegeben, so dass der zweite Zähler (ZE2) seinen Endzählerstand (STE3) erreicht.

D. Nach Erreichen des Endzählerstandes (STE3) startet der zweite Zähler (ZE2) einerseits den empfangsseitigen ersten Zähler (ZE1) und anderseits den empfangsseitigen Schlüsselrechner (SRE).

**Claims**

1. Process for the coded transmission of data, wherein a plurality of code preambles are transmitted, wherein during the transmission of the code preambles (PR1, PR2) the pulse repetition frequency of a clock pulse generator (TGE) is adjusted at the receiving end, and wherein following the reception of the code preambles the receiving end code computer (SRE) is set and the adjustment of the receiving end clock pulse generator is blocked until the next code preamble, characterised in that for the synchronising of a facsimile data transmission the first code preamble to be transmitted (PR1) consists of a larger number of bits than the subsequently transmitted code preambles (PR2), that following each of the code preambles (PR1, PR2) a sequence of facsimile data is transmitted, the duration of which is long in comparison to the duration of the previously transmitted code preambles (PR1, PR2) and that facsimile devices (FAXS, FAXE) connected at the transmitting end and at the receiving end are in operation even during the transmission of the code preambles (PR1, PR2) so that the code preambles (PR1, PR2) are transmitted in place of the corresponding facsimile data.

2. Process as claimed in claim 1, characterised by the following process steps:

A. At the transmitting end a start count of a transmitting end counter (ZS) is set up and following the last bit (BS1) of the code preamble (PR1) the transmitting end counter (ZS) is started.

B. At the transmitting end a transmitting end code computer (SRS) is set up and following the last bit (BS1) of the code preamble (PR1) the transmitting end code computer (SRS) is started.

C. Following the last bit (BS1) of the code preamble (PR1) the sequence of coded facsimile data (D1) is transmitted until the transmitting end counter (ZS) reaches a first end count (STS1) at which the transmitting end code computer (SRS) is stopped in a determinate fashion; then the second code preamble (PR2) is transmitted.

D. At the transmitting end the start count of the transmitting end counter (ZS) is set up and following the last bit (BS2) of the second code preamble (PR2) the transmitting end counter (ZS) is started.

E. At the transmitting end the transmitting end code computer (SRS) is set up and following the last bit (BS2) of the second code preamble (PR2) the transmitting end code computer (SRS) is started.

F. Following the last bit (BS2) of the second code preamble (PR2) the second sequence of the coded facsimile data (D2) is transmitted until the transmitting end counter (ZS) reaches a second end count at which the transmitting end code computer (SRS) is stopped in a determinate fashion.

G. At the receiving end a start count of a receiving end counter (ZE1) is set up and following the reception of the last bit (BE1) of the code preamble (PR1) the receiving end counter (ZE1) is started.

H. At the receiving end a receiving end code computer (SRE) is set up and following the reception of the last bit (BE1) of the code preamble (PR1) the receiving end code computer (SRE) is started.

K. Following the reception of the last bit (BE1) of the code preamble (PR1) the sequence of coded facsimile data (D1) is received and the synchronisation is discontinued until the receiving end counter (ZE1) reaches a given end count (STE1) which is identical to the end count (STS1) of the transmitting end counter (ZS) and at which the receiving end code computer (SRE) is stopped in a determinate fashion; then the second code preamble (PR2) is received and the synchronisation is re-established.

L. At the receiving end the start count of the receiving end counter (ZE1) is set up and following the reception of the last bit (BE2) of the second code preamble (PR2) the receiving end counter (ZE1) is started.

M. At the receiving end the receiving end code computer (SRE) is set up and following the reception of the last bit (BE2) of the second code preamble (PR2) the receiving end code computer (SRE) is started.

N. Following the reception of the last bit (BE2) of the second code preamble (PR2) the second sequence of coded facsimile data (D2) is received and the synchronisation is discontinued until the receiving end counter (ZE1) reaches a second end count (STE2) which is identical to the second end count (STS2) of the transmitting end counter (ZS) and at which the receiving end code computer (SRE) is stopped in a determinate fashion (Fig. 2).

3. Process as claimed in claim 2, characterised by the following steps:

A. At the receiving end a second counter (ZE2) is started when the receiving end counter (ZE1) reaches its end count (STE1).

B. When the second code preamble (PR2) is correctly received, with the aid of a decoder a decoder signal is obtained and in this way the second counter (ZE2) is reset following the last bit (BE2) of the second code preamble (PR2) before the second counter (ZE2) has reached its end count (STE3).

C. If the second code preamble (PR2) remains unrecognised, the decoder signal is not emitted so that the second counter (ZE2) reaches its end count (STE3).

D. When the end count (STE3) has been reached, the second counter (ZE2) starts the receiving end first counter (ZE1) on the one hand and the receiving end code computer (SRE) on the other hand.

## Revendications

1. Procédé pour la transmission chiffrée de données, dans lequel on transmet plusieurs préambules de chiffrement, dans lequel pendant la réception des préambules de chiffrement (PR1, PR2) on réajuste la fréquence de répétition des impulsions d'un générateur de cadence (TGE) situé du côté réception et dans lequel, après la réception des préambules de chiffrement, on règle le calculateur de chiffrement (SRE) situé du côté réception, et on bloque le réajustement du générateur de cadence situé du côté réception jusqu'au préambule de chiffrement suivant, caractérisé par le fait que pour la synchronisation d'une transmission de données facsimilées, le préambule de chiffrement (PR1) transmis en premier est constitué par un nombre de bits qui est supérieur à celui des préambules de chiffrement (PR2) qui sont transmis ensuite, qu'après les préambules de chiffrement (PR1, PR2) on transmet respectivement une série de données facsimilées dont la durée est longue par rapport à la durée des préambules de chiffrement (PR1, PR2) transmis précédemment, et que les appareils facsimilés (FAXS, FAXE) situés du côté émission et du côté réception sont en service également pendant la transmission des préambules de chiffrement (PR1, PR2), en sorte que les préambules de chiffrement (PR1, PR2) sont transmis à la place des données facsimilées correspondantes.

2. Procédé selon la revendication 1, caractérisé par les phases opératoires suivantes:

A. Du côté émission, on règle un état de comptage initial d'un compteur (ZS) situé du côté émission, et, après le dernier bit (BS1) du préambule de chiffrement (PR1), on fait démarrer le compteur (ZS) situé du côté émission.

B. Du côté émission, on règle un calculateur de chiffrement (SRS) situé du côté émission, et, après le dernier bit (BS1) du préambule de chiffrement (PR1), on fait démarrer le calculateur de chiffrement du côté émission (SRS).

C. après le dernier bit (BS1) du préambule de chiffrement (PR1), on émet la série de données facsimilées chiffrées (D1) jusqu'à ce que le compteur côté émission (ZS) atteigne un premier état de comptage final (STS1) pour lequel le calculateur de chiffrement (SRS) situé du côté émission est arrêté de façon définie; ensuite on émet le second préambule de chiffrement (PR2).

D. Du côté émission, on règle l'état de comptage initial du compteur (ZS) situé du côté émission, et, après le dernier bit (BS2) du second préambule de chiffrement (PR2), on fait démarrer le compteur (ZS) situé du côté émission.

E. Du côté émission, on règle le calculateur de chiffrement (SRS) situé du côté émission, et, après le dernier bit (BS2) du second préambule de chiffrement (PR2), on fait démarrer le calculateur de chiffrement (SRS) situé du côté émission.

F. Après le dernier bit (BS2) du second préambule de chiffrement (PR2), on émet la seconde série de données facsimilées chiffrées (D2) jusqu'à ce que le compteur (ZS) situé du côté émission atteigne un second état de comptage final pour lequel le calculateur de chiffrement (SRS) situé du côté émission soit arrêté de façon définie.

G. Du côté réception, on ajuste l'état de comptage initial d'un compteur (ZE1) situé du côté réception, et, après réception du dernier bit (BE1) du préambule de chiffrement (PR1), on fait démarrer le compteur (ZE1) situé du côté réception.

H. Du côté réception, on ajuste un calculateur de chiffrement (SRE) situé du côté réception, et, après réception du dernier bit (BE1) du préambule de chiffrement (PR1), on fait démarrer le calculateur de chiffrement (SRE) situé du côté réception.

K. Après réception du dernier bit (BE1) du préambule de chiffrement (PR1), on reçoit la série des données facsimilées chiffrées (D1) et on débranche la synchronisation jusqu'à ce que le compteur (ZE1) situé du côté réception atteigne un état de comptage final (STE1) donné à l'avance et qui est égal à l'état de comptage final (STS1) du compteur (ZS) situé du côté émission et pour lequel le calculateur de chiffrement (SRE) situé du côté réception est arrêté de façon définie; ensuite, on reçoit le second préambule de chiffrement (PR2) et la synchronisation est branchée.

L. Du côté réception, on ajuste l'état de comptage initial du compteur (ZE1) situé du côté réception, et, après réception du dernier bit (BE2) du second préambule de chiffrement (BR2), on démarre le compteur (ZE1) situé du côté réception.

M. Du côté réception, on ajuste le calculateur de chiffrement (SR2) situé du côté réception et, après réception du dernier bit (BE2) du second préambule de chiffrement (PR2), on fait démarrer le calculateur de chiffrement (SRE) situé du côté réception.

N. Après réception du dernier bit (BE2) du second préambule de chiffrement (PR2), on reçoit la seconde série de données facsimilées chiffrées (D2) et la synchronisation est débranchée jusqu'à ce que le compteur (ZE1) situé du côté réception atteigne un second état de comptage final (STE2) qui est égal au second état de comptage final (STS2) du compteur (ZS) situé du côté émission et pour lequel le calculateur de chiffrement (SRE) situé du côté réception est arrêté de façon définie (fig. 2).

3. Procédé selon la revendication 2, caractérisé par les phases opératoires suivantes:

A. Du côté réception, on fait démarrer un second compteur (ZE2) lorsque le compteur (ZE1) qui est situé du côté réception a atteint son état de comptage final (STE1).

B. Dans le cas d'une réception correcte du second préambule de chiffrement (PR2) on obtient, à l'aide d'un décodeur, un signal de décodage et, avec cela, le second compteur (ZE2) est ramené, après le dernier bit (BE2) du second préambule de chiffrement (PR2), à son état initial avant que le second compteur (ZE2) atteigne son état de comptage final (STE 3).

C. Dans le cas de la non identification du second préambule de chiffrement (BR2), le signal de décodage n'est pas émis, en sorte que le second compteur (ZE2) n'atteint pas son état de comptage final (STE3).

D. Après que soit atteint l'état de comptage final (STE3), le second compteur (ZE2) fait démarrer d'une part le premier compteur (ZE1) situé du côté réception et d'autre part le calculateur de chiffrement (SRE) situé du côté réception.

FIG 1

9

# FIG 2